# EUROPEAN PATENT SPECIFICATION

(11) **EP 2 302 246 B1**
(45) Date of publication and mention of the grant of the patent: **06.06.2012**
(21) Application number: 10182451.4
(22) Date of filing: 29.09.2010
(51) Int. Cl.: F16D 25/08

(54) **A rotary transmission coupling**
Drehgetriebekupplung
Couplage de transmission rotative

(30) Priority: 29.09.2009 GB 0917027
(43) Date of publication of application: 30.03.2011
(73) Proprietor: Ford Global Technologies, LLC, Dearborn, MI 48126 (US); Countytrac Limited, Ashford, Kent TN23 1EW (GB)
(72) Inventor: May, Eric, Sittingbourne, Kent ME10 2SZ (GB); Shearer, Kyle, Witham, Essex CM8 1QV (GB)
(74) Representative: Grunfeld, David Peter

(56) References cited:
- WO-A1-2007/147378
- DE-A1- 2 828 317
- DE-A1- 3 705 052
- DE-B- 1 218 813

## Description

This invention relates to a hydraulically operable rotary transmission coupling suitable for a vehicle transmission and in particular for a vehicle having a selectable all wheel drive facility.

Many four wheel drive vehicles normally operate in a two wheel drive (2WD) mode and have part time drive to additional drive wheels when four wheel drive (4WD) is required.

One conventional method of operation is a manual shift operated by the vehicle driver between 2WD and 4WD and this is normally achieved by means of a second gear stick located in the vehicle drive compartment which engages a transfer gear so as to provide an additional transmission path to the additional wheels that need to be driven. This type of device has the disadvantage that 4WD has to be engaged manually by a driver of the vehicle.

It is further known from, for example EP1610019, to provide a rotary transmission coupling having a rotary input and a rotary output connected through a clutch located within a casing. The clutch is operable by a hydraulic actuator that is responsive to hydraulic pressure generated by a pump. The pump is activated when a differential speed is present between the rotary input and the rotary output.

A problem with such a speed differential pump arrangement is that 4WD is only actuated when actual slipping of at least one the two permanently driven wheels occurs.

It is known from DE-3,705,052 to provide a rotary transmission coupling having a rotary input and a rotary output both of which are rotatable about a common axis, a friction clutch for selectively coupling the rotary output to the rotary input and an actuator assembly responsive to hydraulic pressure generated by a remote pump for selectively engaging the friction clutch, the hydraulic actuator assembly comprising a body defining an annular working chamber in which is sealingly located an annular piston and a thrust bearing interposed between the annular piston and a clutch actuating member of the friction clutch.

It is an object of the invention to provide a rotary transmission coupling that can be independently controlled and does not rely on wheel slippage for actuation.

According to a first aspect of the invention there is provided a rotary transmission coupling as described above with respect to DE-3,705,052 characterised in that the body is restrained so as to prevent rotation about the common axis but permit limited translation along the common axis by a number of spigots arranged parallel to the common axis so as to permit the limited translation along the common axis

Each of the spigots may be engaged in use with a complementary recess formed in a casing of a transmission assembly of which the rotary transmission coupling forms a part.

At least one of the spigots may be a hollow spigot used to supply hydraulic fluid from the remote pump to the annular working chamber.

At least one of the spigots may be a hollow spigot used to return hydraulic fluid from the annular working chamber.

The friction clutch may include a clutch housing and a clutch cover and the clutch cover may include a flange portion for securing to a complementary flange on the clutch housing and a tubular nose on which the body of the actuator assembly is supported by a bearing.

A thrust cap may be rotationally secured to the tubular nose and, when hydraulic pressure is applied to the piston of the actuator assembly, the body reacts through a thrust bearing against the thrust cap.

The flange portion of the clutch cover may include a number of circumferentially spaced apertures and complementary lugs formed on the clutch actuating member extend through the apertures for operating the friction clutch.

The output may be an output shaft that extends through the tubular nose and is adapted at one end for driving connection to one or more clutch driven plates of the friction clutch.

The rotary input may be formed by the clutch housing.

The body and the piston may form in combination a hydraulic actuator used to selectively operate the friction clutch.

The friction clutch may be a multi-plate friction clutch and the hydraulic actuator may exert a clamping load on the clutch plates so as to transmit drive from the rotary input to the rotary output.

The multi-plate clutch may comprise a stack of annular friction plates having alternate drive and driven plates rotationally fast with a clutch housing of the friction clutch and an output shaft through their outer and inner peripheries respectively, the clutch housing becoming rotationally fast with the output shaft when the clutch drive and driven plates are clamped together by the hydraulic actuator.

According to a second aspect of the invention there is provided a transmission assembly for a motor vehicle having at least one rotary transmission coupling constructed in accordance with said first aspect of the invention.

An auxiliary final drive system forming part of the assembly may have a pair of rotary transmission couplings each having a clutch housing connected to opposite ends of a common input shaft, each rotary transmission coupling having a respective output shaft rotatably connected to the common input shaft through a friction clutch of the respective rotary transmission coupling, each output shaft selectively driving in use a respective wheel of a motor vehicle to which the transmission assembly is fitted.

The assembly may provide permanent drive to two or more wheels via an output shaft and selectable drive to two or more further wheels via the two rotary transmission couplings.

According to a third aspect of the invention there is provided a motor vehicle having an engine driving a transmission assembly constructed in accordance with said second aspect of the invention wherein the motor vehicle further comprises a remote source of hydraulic pressure for each rotary transmission coupling.

The remote source of hydraulic pressure may be controlled by an electronic control unit and the operation of each rotary transmission coupling is independently controlled by the electronic control unit.

The invention will now be described by way of example with reference to the accompanying drawing of which:-
Fig.1 is a schematic view of a motor vehicle having a transmission assembly according to one aspect of the present invention;
Fig.2 is an isometric schematic view of a rotary transmission coupling according to the present invention;
Fig.3a is an end view of a clutch pack forming part of the rotary transmission coupling;
Fig.3b is a cross-section along the line B-B on Fig.3a of the clutch pack;
Fig.4 is an exploded pictorial view of the clutch pack shown in Figs. 3a and 3b;
Fig.5 is an isometric view of the rotary transmission coupling showing an actuator assembly forming part of the rotary transmission coupling in an exploded form;
Fig.6 is an exploded view of an actuator forming part of the actuator assembly shown in Fig.5;
Fig.7 is an end view of the actuator shown in Fig.6;
Fig.8 is a cross-section along the line A-A on Fig.7;
Fig.9 is an enlarged view of the circled region B on Fig.8;
Fig.10 is an end view of the rotary transmission coupling;
Fig.11 is a cross-section along the line C-C on Fig.10;
Fig.12a is a front left hand pictorial view of a transmission assembly according to the invention;
Fig.12b is a scrap cross-section through part of an end cover forming part of the transmission assembly shown in Fig.12a;
Fig.13 is a rear left hand pictorial view of the transmission assembly shown in Fig.12;
Fig.14 is a left hand side view of the transmission assembly shown in Figs.12a and 13;
Fig.15 is a cross-section along the line X-X on Fig.14;
Fig.16 is a pictorial view of part of the drive path of the transmission assembly shown in Figs.12a, 13, 14 and 15; and
Fig.17 is a schematic representation of a remote source of hydraulic power for two rotary transmission couplings forming part of the transmission assembly shown in Figs. 12a, 13, 14, 15 and 16.

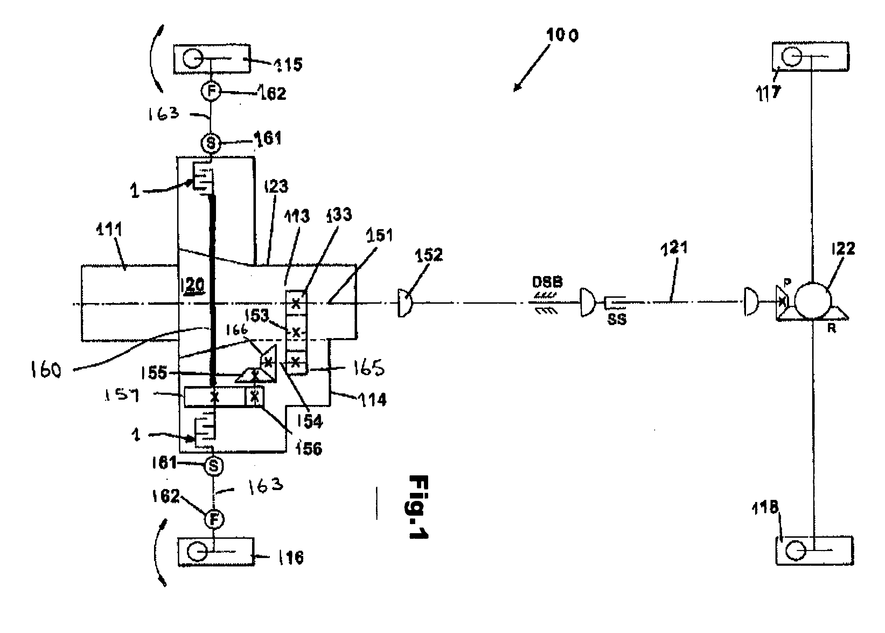

With reference to Fig.1, there is shown a motor vehicle 100 having an engine 111 arranged longitudinally of the vehicle 100. A casing 123 of a transmission assembly 113 is mounted on the rear of the engine 111 via a clutch bell housing 120. The transmission assembly 113 is arranged in this case with its primary drive connected to two rear wheels 117 & 118 which are driven by a transmission output shaft 151 via a conventional propeller shaft 121 and differential unit 122 having the typical ring gear R and pinion P. The transmission assembly 113 also includes an auxiliary final drive system 114 which drives two front wheels 115 and 116. The transmission output shaft 151 is connected to the propeller shaft 121 via a flanged connection 152. The propeller shaft 121 may include a central support bearing DSB and a splined coupling SS.

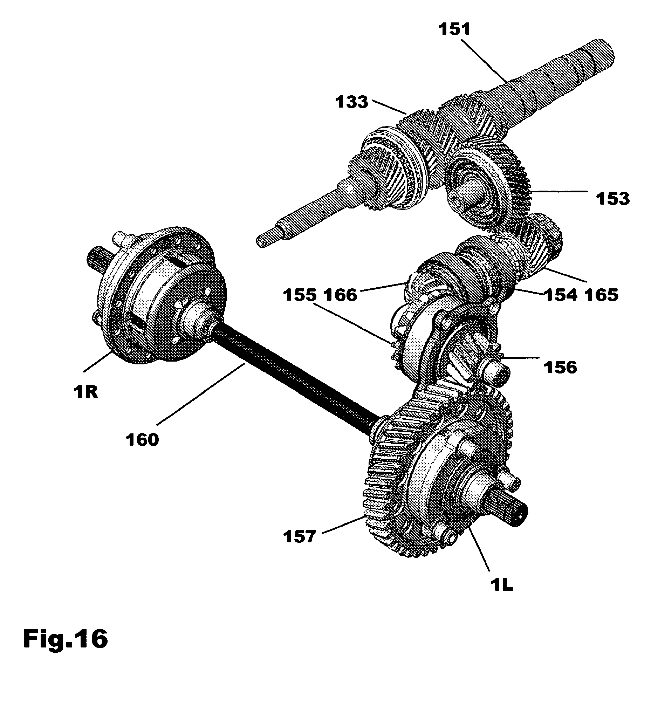

The auxiliary drive for the front wheels 115 and 116 is taken off the transmission output shaft 151 via an auxiliary final drive gear system. The auxiliary final drive system has a transfer gear 153 which meshes with a gear 133 rotatably fast with the transmission output shaft 151. A driven gear 165 mounted on a first shaft 154 has first gear 165 which meshes with the gear 133 and has a first bevel gear 166 on its other end. A second bevel gear 155 meshes with the first bevel gear 166 and drives a helical pinion gear 156 which meshes with a helical ring gear 157, as is shown in detail in Fig 16.

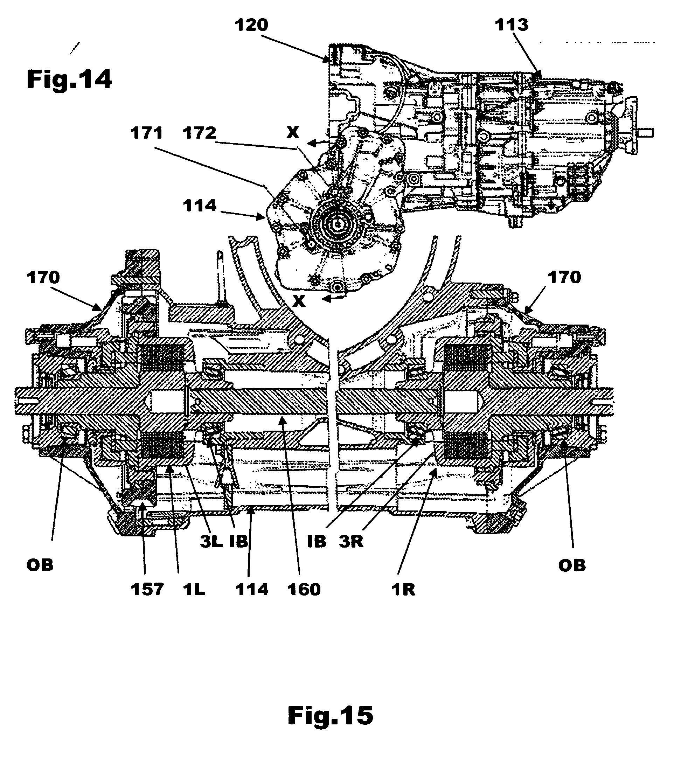

The ring gear 157 is connected in parallel to a pair of hydraulically operated rotary transmission couplings 1 (1L and 1R on Figs 15 and 16) via a cross shaft 160. The rotary transmission couplings 1 are connected to respective wheels 115, 116 through constant velocity joints 161, 162 and half-shafts 163.

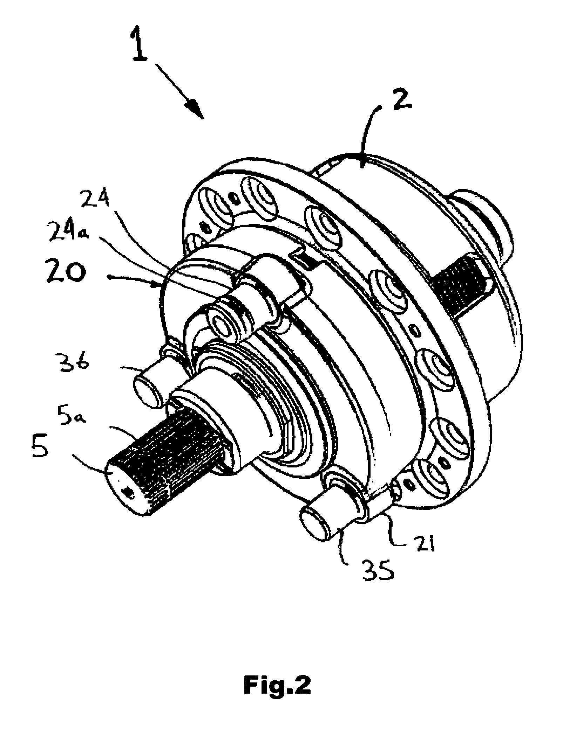

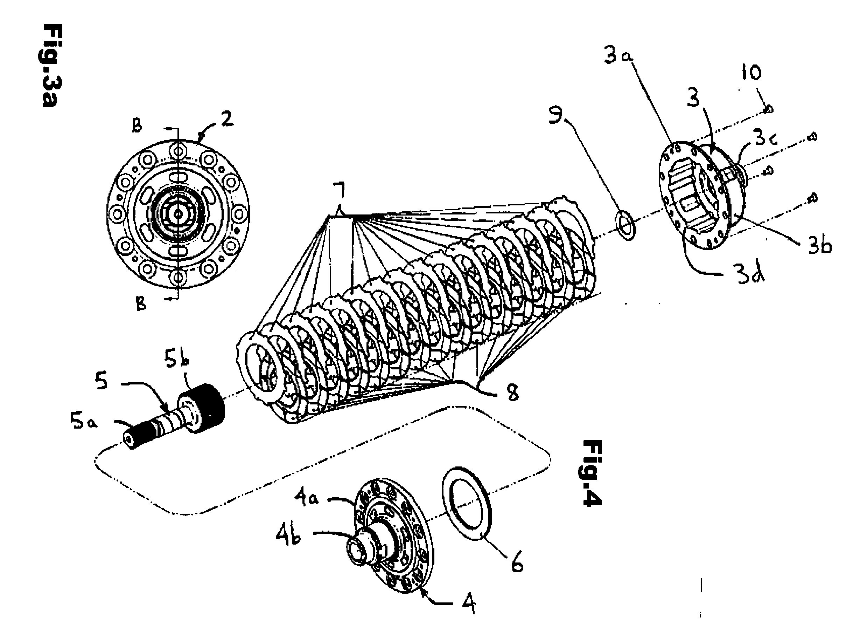

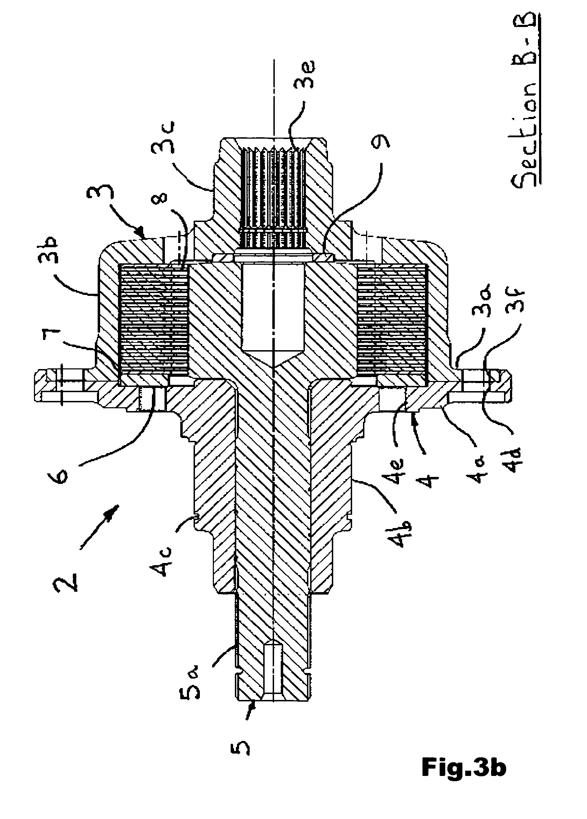

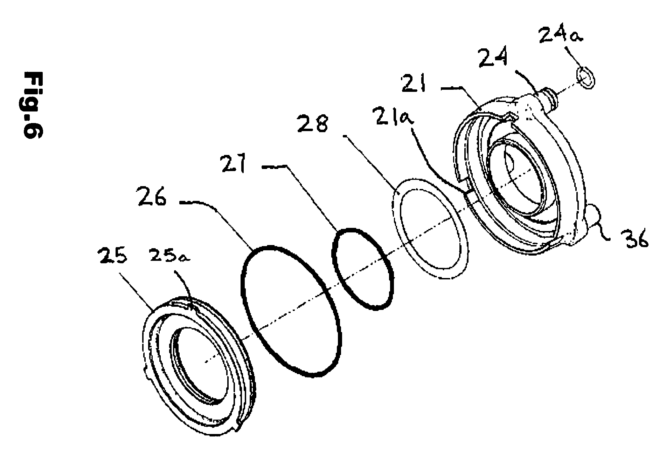

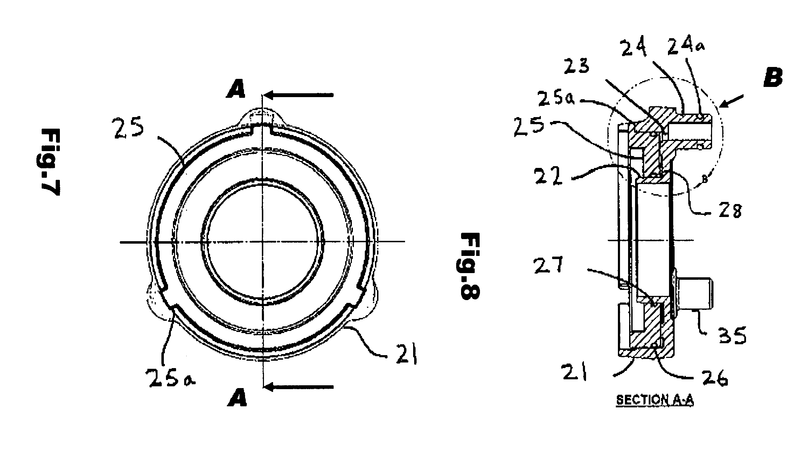

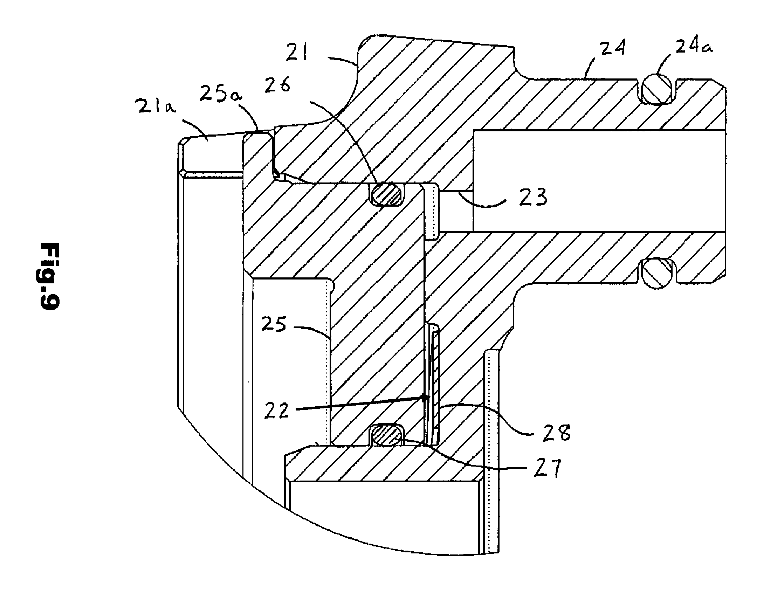

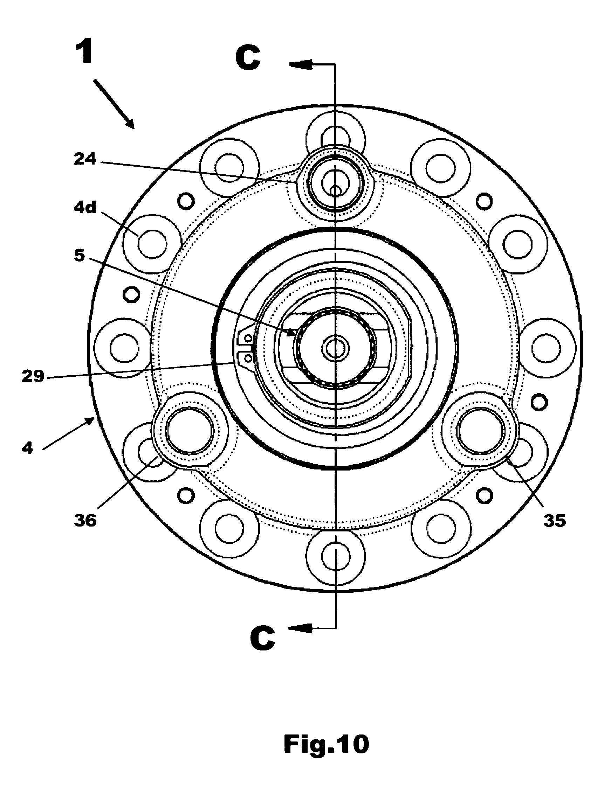

With particular reference to Figs. 2 to 11 there is shown a rotary transmission coupling 1 of the type used in the transmission assembly 113.

The rotary transmission coupling 1 comprises of a friction clutch in the form of a multi-plate wet clutch pack 2 and an actuator assembly 20 which are connected together and form in combination a selectable drive between an input in the form of a clutch housing 3 of the clutch pack 2 and an output in the form of an output shaft 5.

The clutch pack 2 comprises the clutch housing 3, a clutch cover 4, a number of clutch drive plates 7, a number of clutch driven plates 8, a clutch thrust plate 6, a thrust washer 9 and a number of fasteners 10 that are used to secure the clutch cover 4 to the clutch housing 3.

The clutch housing 3 has a flange 3a at one end for connection to a complementary flange 4a on the clutch cover 4, a body portion 3b defining a cylindrical clutch chamber in which are mounted the clutch plates 7 and 8 and a snout 3c at an opposite end to the flange 3a.

The flange 3a has a number of apertures 3f formed in it to allow for the passage of the fasteners 10. The body portion 3b has a number of grooves 3d formed in a wall defining the cylindrical clutch chamber for cooperation with drive lugs formed around the outer periphery of the clutch drive plates 7.

The snout 3c has an internal spline 3e which in use provides a drive connection to the cross-shaft 160 which in this case provides rotary drive to the clutch pack 2. In other arrangements the clutch housing 3 may be driven by a ring gear and the internal spline 3e then drives the cover 3 of another rotary transmission coupling via the cross shaft 160. In yet a further alternative arrangement a driven gear may be fast with the cross shaft 160 and two rotary transmissions couplings are driveably connected at opposite ends of the cross shaft.

The clutch cover 4 has a flange 4a connected to one end of a tubular nose portion 4b. The flange 4a includes a number of first apertures 4d spaced and positioned to align with the apertures 3f in the clutch housing 3 so as to allow for the passage of the fasteners 10 and a number of second apertures 4e to provide access to the clutch thrust plate 6. The tubular nose portion 4b has an external groove 4c formed therein to accommodate a circlip 29 used to attach the actuator assembly 20 to the clutch pack 2 and has a flat adjacent to the circlip groove 4c.

The output shaft 5 is rotatably supported by the tubular nose portion 4b and has a first splined end portion 5a for connection to an output in the form of the half shaft 163 via a constant velocity joint 161 and a second splined end portion 5b to provide a driveable connection between the output shaft 5 and the clutch driven plates 8. The thrust washer 9 is interposed between one end of the output shaft 5 and the clutch housing 3 to control end float of the output shaft 5 and prevent wear of the clutch housing 3. The output shaft 5 and the clutch housing 3 are rotatable about a common axis of rotation.

Operation of the clutch pack 2 is conventional and will not be described in detail. When an axial load is applied to the clutch plates 7 and 8 by the actuator assembly 20 via the clutch thrust plate 6 the clutch plates 7 and 8 are clamped together thereby creating a driveable connection between the clutch housing 3 and the output shaft 5 the torque transmitting capacity of which is related to the clamping force provided and the frictional characteristics of the clutch plates 7 and 8 and the fluid (oil) in which the clutch pack 2 is immersed.

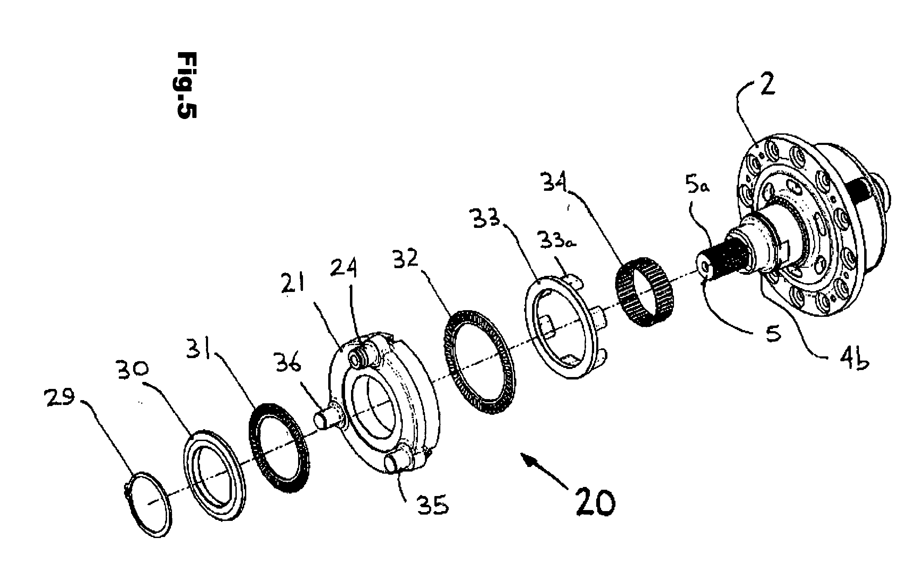

With particular reference to Figs 5 to 9 the actuator assembly 20 comprises of an actuator body 21, a circlip 29, a thrust cap 30, first and second thrust bearings 31 and 32, a clutch thrust member 33 and a needle roller bearing 34.

The actuator body 21 defines an annular working chamber 22 in which is slidingly mounted a piston 25, the body 21 and the piston 25 forming in combination a hydraulic actuator for the clutch pack 2. The piston 25 is sealingly connected to the working chamber 22 by outer and inner seals 26 and 27 and a spring washer 28 is interposed between a rear face of the piston 25 and the actuator body 21.

The piston 25 has three lugs 25a which engage with three complementary recesses 21a formed in the actuator body 21 to prevent rotation of the piston 25 relative to the actuator body 21.

The actuator body 21 has three integral hollow spigots 24, 35, 36 at one end arranged parallel to the common axis of rotation. Each of the hollow spigots 24, 35, 36 has a bore that is connected at one end to the working chamber via a respective port 23. An O-ring seal 24a is fitted to the outer periphery of each spigot 24, 35 and 36 to form a seal between the respective spigot 24, 35 and 36 and an end cover 170 of a transmission assembly 113 of which the rotary transmission coupling 1 forms a part. Note that, for simplicity of illustration, only the spigot 24 is shown as hollow with an O-ring but in fact all three spigots 24, 35 and 36 are identical.

The clutch thrust member 33 has a number of lugs 33a, each of which is arranged in use to extend through one of the apertures 4e in the clutch cover 4 so as to act against the thrust plate 6 in order to operate the clutch pack 2. The piston 25 is arranged to react against the clutch thrust member 33 via the second thrust bearing 32 which is interposed between the piston 25 and the clutch thrust member 33 this arrangement allows the piston 25 to remain in a non-rotary or stationary state when the clutch pack 2 rotates.

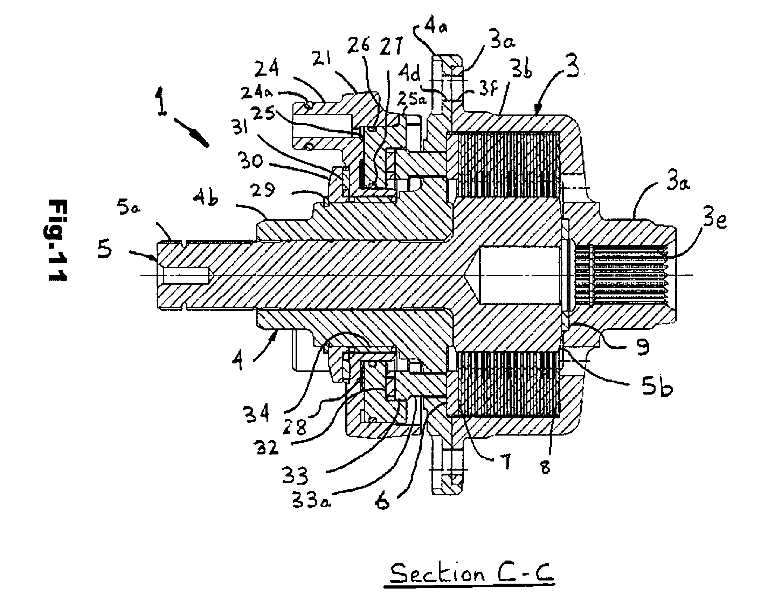

As best seen in Fig.11, the actuator body 21 is rotatably supported on the tubular nose 4b of the clutch cover 4 by the needle roller bearing 34 and is held on the tubular nose portion 4b by the circlip 29 and the thrust cap 30. The thrust cap 30 has a D-shaped aperture to allow it to engage with the flat on the tubular nose portion 4b thereby preventing rotation of the thrust cap 30 relative to the tubular nose portion 4b.

When hydraulic pressure is supplied to the working chamber 22 to engage the clutch pack 2 the thrust from the actuator body 21 is reacted to the circlip 29 via the thrust cap 30 and the first thrust bearing 31 which is interposed between the thrust cap 30 and the actuator body 21.

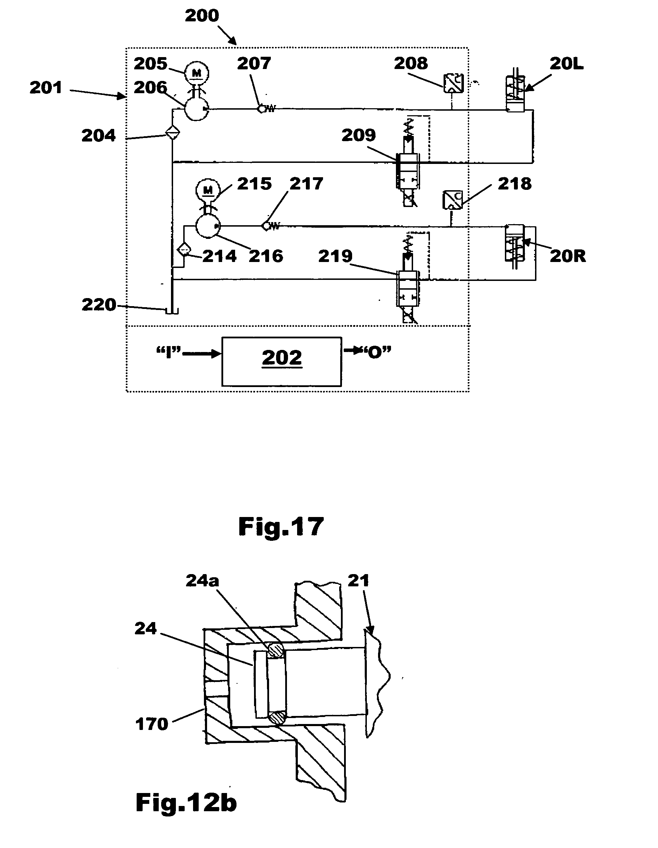

The three spigots 24, 35 and 36 not only supply the working chamber 22 with hydraulic fluid at pressure from an external source of hydraulic pressure such as a hydraulic power pack they also prevent rotation of the actuator body 21 by their engagement with recesses in the end cover 170 of the transmission assembly 113. As can best be seen with reference to Fig.12b one of the advantages of the type of connection used between the actuator body 21 and the end cover 170 is that it allows the actuator body to float relative to the end cover 170 so that any tolerance build-up or wear of components is accommodated. It will be appreciated that axial float is provided by the ability of the spigots 24, 35, 36 to slide a limited amount into or out of the recess within the end cover 170 with which they are engaged and that limited circumferential float is provided by deformation of the O-rings 24a used to provide a seal between the spigots 24, 35, and 36 and the respective recess.

It will be appreciated that the multi-plate friction clutch pack 2 comprises a stack of annular friction plates having alternate drive and driven plates 7 and 8 rotationally fast with the clutch housing 3 of the friction clutch and an output shaft 5 through their outer and inner peripheries respectively and that the clutch housing 3 becomes rotationally fast with the output shaft 5 when the clutch drive and driven plates 7 and 8 are clamped together by the hydraulic actuator.

One advantage of a rotary transmission coupling 1 according to the invention is that it is operated by a source of hydraulic power that is external to and independent of the coupling 1. This allows the rotary transmission coupling 1 to be controlled in any desired manner and does not rely on the slippage of one or more permanently driven wheels to actuate it.

A second advantage of the invention is that, because the actuator body 21 is non-rotating and the piston 25 is non-rotating, only a simple sliding seal arrangement is required to seal the piston 25 in the actuator body 21. No rotating seals are required for a rotary transmission coupling constructed in accordance with this invention, this is advantageous in that such seals are relatively expensive compared to a simple sliding seal and have a higher risk of leakage.

Yet one more advantage of the invention is that all of the forces produced when hydraulic pressure is applied to urge the piston 25 to engage the clutch pack 2 are reacted within the rotary transmission coupling itself and are not transferred externally to other components such as bearing of the transmission assembly 113 to which the rotary transmission coupling 1 is fitted.

A further advantage of the invention is that the reaction force produced when hydraulic pressure is applied to urge the piston 25 to engage the clutch pack 2 is reacted within the clutch cover 4. That is to say, no extra force is applied to the interface between the clutch cover 4 and the clutch housing 3.

As referred to above, the instantaneous torque transmitting capacity of the clutch pack 2 is determined by the friction coefficient between the drive and driven clutch plates 7 and 8 and the clamping force applied by the actuator assembly 20 to the clutch plates 7, 8 via the clutch thrust plate 6. This clamping force is the product of the effective area of the piston 25 and the hydraulic pressure supplied to the actuator assembly via one of the spigots 24, 35, 36. It will be appreciated that one of the spigots (in this case spigot 36) acts as a supply from an external source of hydraulic pressure and a second spigot (in this case spigot 24) acts as a return to the external source of hydraulic pressure such as the hydraulic power pack 201 shown in Fig.17. Because all three spigots 24, 35, 36 are identical the orientation of the rotary transmission coupling 1 relative to the end cover 170 does not matter thereby aiding assembly.

Operation of the rotary transmission coupling 1 is as follows, when torque is required to be transmitted hydraulic pressure is applied to the piston 25 causing it to apply an axial load via the second thrust bearing 32 and the clutch thrust member 33 to the clutch thrust plate 6 which then forces together the drive and driven plates 7 and 8 permitting drive from the input connected to the clutch housing 3 to be transmitted to the output shaft 5. The spring washer 28 fitted within the actuator body 21 ensures that when the hydraulic pressure is removed the piston 25 remains in light contact with the second thrust bearing 32 thereby prevent any lost motion occurring in the mechanism.

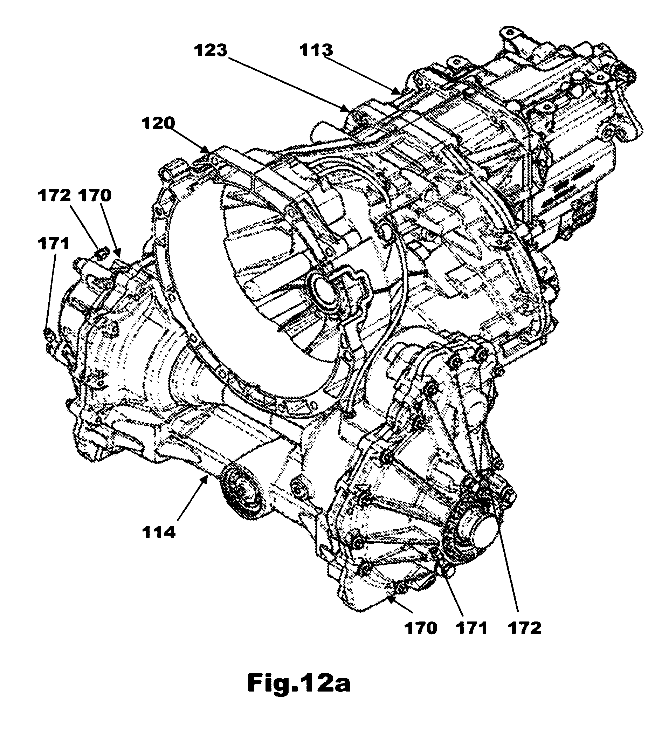

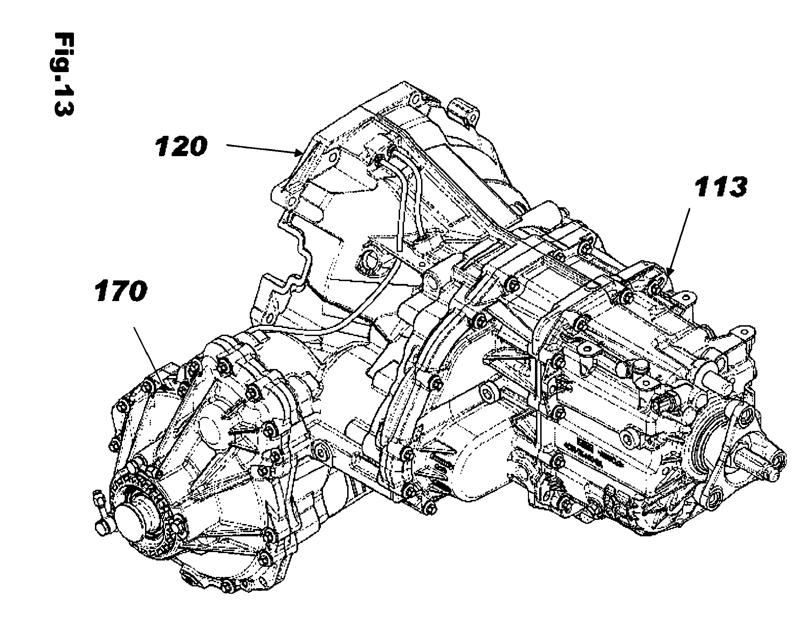

Referring now in particular to Figs 12a to 16 there is shown in greater detail the transmission assembly 113 shown in Fig.1.

The transmission assembly 113 includes a transmission casing 123 which has a bell housing 120 at one end for connecting the transmission assembly 113 to the engine 111. The transmission assembly includes a primary drive transmission that is used to permanently drive the rear wheels 117, 118 and an auxiliary final drive system 114 that is used to supply drive from the primary drive transmission to the front wheels 115, 116.

To each side of the transmission casing 123 there is bolted a respective end covers 170 each of which includes the three recesses required for co-operation with the spigots 24, 35 and 36 of a respective rotary transmission coupling 1L, 1R.

Internal passageways in the end covers 170 are used to connect the active spigots (in this case spigots 24 and 36) to return and supply connections 171 and 172 used to connect the respective rotary transmission couplings 1 to the external source of hydraulic pressure such as the hydraulic power pack 201 shown in Fig.17.

As best seen in Fig.15 a respective rotary transmission coupling 1R, 1L forming part of the auxiliary final drive system 114 is positioned on each side of the transmission assembly 113 so as to provide a selectable drive to the two front wheels 115, 116. The two rotary transmission couplings 1L, 1R are connected together by a common cross shaft 160 so that, in the example shown, the clutch housing 3R of the right hand rotary transmission coupling 1R is driven from of the clutch housing 3L of the left hand rotary transmission 1L. The clutch housing 3L has the helical ring gear 157 fastened to it by any suitable means such as, for example, a number of bolts. Drive from the transmission output shaft 151 is continuously provided to the helical ring gear 157 via the transfer gears 133, 153, 165, 166 and 156 and so at any time the drive to the front wheels 115, 116 can be made or broken and there is no need for the vehicle 100 to stop or travel at low speed.

As can be seen each of the rotary transmission couplings 1L, 1R is supported by respective inner and outer taper roller bearings IB and OB. The inner roller bearing IB in each case is located on the snout 3c of the respective rotary transmission coupling 1L, 1R that it supports and the outer roller bearing being located on the end of the tubular nose 4b of the respective rotary transmission coupling 1L, 1R that it supports. It will be appreciated that one advantage of the manner in which the hydraulic actuator is supported is that no forces of actuation are transmitted to these supporting roller bearing IB and OB. That is to say, all of the forces of actuation are kept within the respective rotary transmission coupling.

Because the two rotary transmission couplings 1L, 1R can be independently controlled no differential is required for the front wheels 115, 116 and active torque vectoring is easily achieved. In addition, drive to the front wheels 115, 116 can be engaged when it is predicted that 4WD will be required and it is not necessary for actual slipping of one of the continuously driven rear wheels 117, 118 to occur before drive is connected to the front wheels 115, 116. For example, and without limitation, if the torque produced by the engine 111 exceeds a predetermined level or momentary slippage of one of the rear wheels is sensed to be occurring or the ambient temperature falls below zero then the two rotary transmission couplings 1R, 1L can be automatically engaged or if the vehicle is sensed to be descending or climbing a steep hill the two rotary transmission couplings 1R, 1L can be automatically engaged or the two rotary transmission couplings 1R, 1L can be manually engaged by say an operator of the vehicle operating a switch. Alternatively, if the vehicle 100 is sensed to be cornering then drive through one of the two rotary transmission couplings 1L, 1R can be reduced or stopped completely by reducing the hydraulic pressure supplied to the respective hydraulic actuator. Furthermore if all of the driven wheels of a vehicle are driven via a respective rotary transmission coupling constructed according to the invention then in icy conditions the torque supplied to the driven wheels can be restricted thereby reducing the risk of wheel spin from occurring.

Therefore the use of external independent hydraulic power sources for the two rotary transmission couplings 1R, 1L provides vastly increased adaptability compared to the prior art use of a coupling activated by differential speed.

With reference now to Fig.17 there is shown a remote source of hydraulic power 200 for the two rotary transmission couplings 1R, 1L shown in Figs. 1 and 15.

The remote source of hydraulic power 200 includes the external hydraulic power pack 201 referred to above and an electronic control unit 202.

The hydraulic power pack 201 includes a first hydraulic supply circuit to supply hydraulic fluid at pressure to an actuator assembly 20L of the left hand side rotary transmission coupling 1L and a second supply circuit to supply hydraulic fluid at pressure to an actuator assembly 20R of the right hand side rotary transmission coupling 1R.

The first hydraulic supply circuit comprises of a filter 204, a pump 206 driven by an electric motor 205 a non-return valve 207 to prevent back flow to the pump 206, a pressure sensor 208 to measure the pressure in the first hydraulic supply circuit, an electronically controllable pressure reducing valve 209 to control the pressure supplied to the left hand side actuator assembly 20L when the pump 206 is operating and a return path to a common reservoir 220 from which hydraulic fluid is drawn and returned.

The second hydraulic supply circuit comprises of a filter 214, a pump 216 driven by an electric motor 215 a non-return valve 217 to prevent back flow to the pump 216, a pressure sensor 218 to measure the pressure in the second hydraulic supply circuit, an electronically controllable pressure reducing valve 219 to control the pressure supplied to the right hand side actuator assembly 20R when the pump 216 is operating and a return path to the common reservoir 220 from which hydraulic fluid is drawn and returned.

The electronic control unit 202 is arranged to receive a number of inputs "I" which may include for example and without limitation, signals from the two pressure sensors 208, 218, the output from a steering sensor (not shown), the output from a throttle position sensor (not shown), a signal indicative of engine torque, a speed signal output from a wheel speed sensor (not shown) associated with each wheel 115, 116, 117 and 118 of the vehicle 100 and is operable via internal control logic to supply outputs "0" to control operation of the electric motors 205, 215 and the pressure reducing valves 209, 219 to produce a desired hydraulic pressure at each of the actuator assemblies 20L, 20R.

According to one aspect of the invention there is provided a rotary transmission coupling having a rotary input and a rotary output both of which are rotatable about a common axis, a friction clutch for selectively coupling the rotary output to the rotary input and an actuator assembly responsive to hydraulic, the friction clutch includes a clutch housing and a clutch cover and the clutch cover includes a flange portion for securing to a complementary flange on the clutch housing and a tubular nose on which the actuator assembly is supported by a bearing in such a manner that all of the forces required to operate the friction clutch are retained within the rotary transmission coupling.

Although the invention has been described above with reference to a motor vehicle having a longitudinally arranged engine 111 and permanently driven rear wheels it will be appreciated that it is not limited to such an arrangement and rotary transmission couplings constructed according to the invention could for example be used in a motor vehicle having permanent front wheel drive and selective rear wheel drive or to vehicles in which all wheels are driven via such a rotary transmission coupling.

It will be further appreciated that a rotary transmission coupling embodying the principles of the invention could operate such that the drive comes in via the shaft referred to in the description above as an output shaft and is transmitted as an output from the clutch housing. In such a case the clutch housing could include the mounting for a wheel of the vehicle to which the rotary transmission coupling is fitted.

It will also be appreciated that the rotational restraint for the body of the hydraulic actuator need not also form a hydraulic supply passage for the hydraulic actuator this could be provided in some other way such as for example by means of a flexible hose. In such a case the body could be prevented of rotation by radially outward extending lugs that engage grooves extending parallel to the common axis of rotation of the rotary transmission coupling formed in the end cover or part of the transmission casing so as to permit the body to translate but not rotate.

It will be further appreciated by those skilled in the art that although the invention has been described by way of example with reference to one or more embodiments it is not limited to the disclosed embodiments and that one or more modifications to the disclosed embodiments or alternative embodiments could be constructed without departing from the scope of the invention as set out in the appended claims.

## Claims

1. A rotary transmission coupling (1) having a rotary input (3) and a rotary output (5) both of which are rotatable about a common axis, a friction clutch (2) for selectively coupling the rotary output (5) to the rotary input (3) and an actuator assembly (20) responsive to hydraulic pressure generated by a remote pump (206, 216) for selectively engaging the friction clutch (2), the hydraulic actuator assembly (20) comprising a body (21) defining an annular working chamber (22) in which is sealingly located an annular piston (25) and a thrust bearing (32) interposed between the annular piston (25) and a clutch actuating member (33) of the friction clutch **characterised in that** the body (21) is restrained so as to prevent rotation about the common axis but permit limited translation along the common axis by a number of spigots (24, 35, 36) arranged parallel to the common axis so as to permit the limited translation along the common axis.

2. A coupling as claimed in Claim 1, wherein each of the spigots (24, 35, 36) is engaged in use with a complementary recess formed in a casing (170) of a transmission assembly (113) of which the rotary transmission coupling (1) forms a part.

3. A coupling as claimed in claim 1 or in claim 2 wherein at least one of the spigots is a hollow spigot (36) used to supply hydraulic fluid from the remote pump (206, 216) to the annular working chamber (22).

4. A coupling as claimed in any of claims 1 to 3, wherein at least one of the spigots is a hollow spigot (24) used to return hydraulic fluid from the annular working chamber (22).

5. A coupling as claimed in any of claims 1 to 4, wherein the friction clutch (2) includes a clutch housing (3) and a clutch cover (4) and the clutch cover (4) includes a flange portion (4a) for securing to a complementary flange (3a) on the clutch housing (3) and a tubular nose (4b) on which the body (21) of the actuator assembly (20) is supported by a bearing.

6. A coupling as claimed in claim 5, wherein a thrust cap (30) is rotationally secured to the tubular nose (4b) and, when hydraulic pressure is applied to the piston (25) of the actuator assembly (20), the body (21) reacts through a thrust bearing (31) against the thrust cap (30).

7. A coupling as claimed in any preceding claim, wherein the body (21) and the piston (25) form in combination a hydraulic actuator used to selectively operate the friction clutch (2).

8. A coupling as claimed in claim 7, wherein the friction clutch (2) is a multi-plate friction clutch and the hydraulic actuator exerts a clamping load on the clutch plates (7, 8) so as to transmit drive from the rotary input (3) to the rotary output (5).

9. A transmission assembly for a motor vehicle having at least one rotary transmission coupling (1) as claimed in any of claims 1 to 8.

10. An assembly as claimed in claim 9, wherein an auxiliary final drive system forming part of the assembly has a pair of rotary transmission couplings (1) each having a clutch housing (3) connected to opposite ends of a common input shaft (160), each rotary transmission coupling (1) having a respective output shaft (5) rotatably connected to the common input shaft (160) through a friction clutch (2) of the respective rotary transmission coupling (1), each output shaft (5) selectively driving in use a respective wheel (115, 116) of a motor vehicle (100) to which the transmission assembly is fitted.

11. An assembly as claimed in claim 10, wherein the assembly provides permanent drive to two or more wheels (117, 118) via an output shaft (151) and selectable drive to two or more further wheels (115, 116) via the two rotary transmission couplings (1).

12. A motor vehicle (100) having an engine (111) driving a transmission assembly as claimed in any of claims 9 to 11, wherein the motor vehicle (100) further comprises a remote source of hydraulic pressure for each rotary transmission coupling (1).

13. A motor vehicle (100) as claimed in claim 12, wherein the remote source of hydraulic pressure is controlled by an electronic control unit (202) and the operation of each rotary transmission coupling (1) is independently controlled by the electronic control unit (202).

## Patentansprüche

1. Drehgetriebekupplung (1) mit einem Dreheingang (3) und einem Drehausgang (5), die beide um eine gemeinsame Achse drehbar sind, einer Reibkupplung (2) zur gezielten Kupplung des Drehausgangs (5) mit dem Dreheingang (3) und einer Aktuatoranordnung (20), die auf durch eine abgesetzte Pumpe (206, 216) erzeugten Hydraulikdruck reagiert, um die Reibkupplung (2) gezielt einzurücken, wobei die hydraulische Aktuatoranordnung (20) einen Körper (21) umfasst, der eine ringförmige Arbeitskammer (22) definiert, in der abdichtend ein ringförmiger Kolben (25) und ein Drucklager (32), das zwischen dem ringförmigen Kolben (25) und einem Kupplungsbetätigungsglied (33) der Reibkupplung angeordnet ist, positioniert sind, **dadurch gekennzeichnet, dass** der Körper (21) durch mehrere Zapfen (24, 35, 36) festgehalten wird, um eine Drehung um die gemeinsame Achse zu verhindern, aber eine begrenzte translatorische Bewegung entlang der gemeinsamen Achse zu gestatten, wobei die Zapfen parallel zur gemeinsamen Achse angeordnet sind, um die begrenzte translatorische Bewegung entlang der gemeinsamen Achse zu gestatten.

2. Kupplung nach Anspruch 1, wobei jeder der Zapfen (24, 35, 36) im Gebrauch mit einer komplementären Aussparung in Eingriff steht, die in einem Gehäuse (170) einer Getriebeanordnung (113), von der die Drehgetriebekupplung (1) einen Teil bildet, ausgebildet ist.

3. Kupplung nach Anspruch 1 oder 2, wobei mindestens einer der Zapfen ein hohler Zapfen (36) ist, der dazu verwendet wird, der ringförmigen Arbeitskammer (22) Hydraulikfluid von der abgesetzten Pumpe (206, 216) zuzuführen.

4. Kupplung nach einem der Ansprüche 1 bis 3, wobei mindestens einer der Zapfen ein hohler Zapfen (24) ist, der dazu verwendet wird, Hydraulikfluid von der ringförmigen Arbeitskammer (22) zurückzuführen.

5. Kupplung nach einem der Ansprüche 1 bis 4, wobei die Reibkupplung (2) ein Kupplungsgehäuse (3) und einen Kupplungsdeckel (4) enthält und der Kupplungsdeckel (4) einen Flanschteil (4a) zur Befestigung an einem komplementären Flansch (3a) am Kupplungsgehäuse (3) und einen röhrenförmigen Ansatz (4b), an dem der Körper (21) der Aktuatoranordnung (20) durch ein Lager gestützt wird, enthält.

6. Kupplung nach Anspruch 5, wobei eine Druckkappe (30) drehfest mit dem röhrenförmigen Ansatz (4b) verbunden ist und bei Anlegen von Hydraulikdruck an den Kolben (25) der Aktuatoranordnung (20) der Körper (21) durch ein Drucklager (31) gegen die Druckkappe (30) reagiert.

7. Kupplung nach einem vorhergehenden Anspruch, wobei der Körper (21) und der Kolben (25) zusammen einen hydraulischen Aktuator bilden, der zur gezielten Betätigung der Reibkupplung (2) verwendet wird.

8. Kupplung nach Anspruch 7, wobei die Reibkupplung (2) eine Mehrscheiben-Reibkupplung ist und der hydraulische Aktuator eine Klemmlast auf die Kupplungsscheiben (7, 8) ausübt, um Antrieb von dem Dreheingang (3) auf den Drehausgang (5) zu übertragen.

9. Getriebeanordnung für ein Kraftfahrzeug mit mindestens einer Drehgetriebekupplung (1) nach einem der Ansprüche 1 bis 8.

10. Anordnung nach Anspruch 9, wobei ein Nebenachsantriebssystem, das Teil der Anordnung bildet, ein Paar Drehgetriebekupplungen (1) aufweist, die jeweils ein Kupplungsgehäuse (3) aufweisen, das mit gegenüberliegenden Enden einer gemeinsamen Eingangswelle (160) verbunden ist, wobei jede Drehgetriebekupplung (1) eine jeweilige Ausgangswelle (5) aufweist, die durch eine Reibkupplung (2) der jeweiligen Drehgetriebekupplung (1) drehbar mit der gemeinsamen Eingangswelle (160) verbunden ist, wobei jede Ausgangswelle (5) im Gebrauch ein jeweiliges Rad (115, 116) eines Kraftfahrzeugs (100), an dem die Getriebeanordnung angebracht ist, gezielt antreibt.

11. Anordnung nach Anspruch 10, wobei die Anordnung Dauerantrieb für zwei oder mehr Räder (117, 118) über eine Ausgangswelle (151) und wählbaren Antrieb für zwei oder mehr weitere Räder (115, 116) über die beiden Drehgetriebekupplungen (1) bereitstellt.

12. Kraftfahrzeug (100) mit einem Motor (111), der eine Getriebeanordnung nach einem der Ansprüche 9 bis 11 antreibt, wobei das Kraftfahrzeug (100) weiterhin eine abgesetzte Hydraulikdruckquelle für jede Drehgetriebekupplung (1) umfasst.

13. Kraftfahrzeug (100) nach Anspruch 12, wobei die abgesetzte Hydraulikdruckquelle durch eine elektronische Steuereinheit (202) gesteuert wird und der Betrieb jeder Drehgetriebekupplung (1) durch die elektronische Steuereinheit (202) unabhängig gesteuert wird.

## Revendications

1. Couplage de transmission rotatif (1) ayant une entrée rotative (3) et une sortie rotative (5) qui peuvent toutes les deux tourner autour d'un axe commun, un embrayage à friction (2) pour l'accouplement sélectif de la sortie rotative (5) à l'entrée rotative (3) et un ensemble d'actionneur (20) réagissant à la pression hydraulique créée par une pompe éloignée (206, 216) pour engager de manière sélective l'embrayage à friction (2), l'ensemble d'actionneur (20) comprenant un corps (21) définissant une chambre de travail annulaire (22) dans laquelle est disposé de manière scellée un piston annulaire (25), et un palier de poussée (32) interposé entre le piston annulaire (25) et un organe d'actionnement d'embrayage (33) de l'embrayage à friction, **caractérisé en ce que** le corps (21) est retenu de manière à empêcher sa rotation autour de l'axe commun mais de manière à permettre une translation limitée le long de l'axe commun par un certain nombre de goujons (24, 25, 26) agencés en parallèle avec l'axe commun de manière à permettre la translation limitée le long de l'axe commun.

2. Couplage selon la revendication 1, dans lequel chacun des goujons (24, 35, 36) est engagé, pendant l'utilisation, avec un retrait complémentaire formé dans un boîtier (170) d'un ensemble de transmission (113) auquel appartient le couplage de transmission rotatif (1).

3. Couplage selon la revendication 1 ou la revendication 2, dans lequel au moins l'un des goujons est un goujon creux (36) utilisé pour fournir du fluide hydraulique depuis la pompe éloignée (206, 216) à la chambre de travail annulaire (22).

4. Couplage selon l'une quelconque des revendications 1 à 3, dans lequel au moins l'un des goujons est un goujon creux (24) utilisé pour ramener le fluide hydraulique depuis la chambre de travail annulaire (22).

5. Couplage selon l'une quelconque des revendications 1 à 4, dans lequel l'embrayage à friction (2) comporte un boîtier d'embrayage (3) et un couvercle d'embrayage (4) et le couvercle d'embrayage (4) comporte une portion de bride (4a) pour la fixation à une bride complémentaire (3a) sur le boîtier d'embrayage (3) et un nez tubulaire (4b) sur lequel le corps (21) de l'ensemble d'actionneur (20) est supporté par un palier.

6. Couplage selon la revendication 5, dans lequel un capuchon de poussée (30) est fixé à rotation sur le nez tubulaire (4b) et lorsqu'une pression hydraulique est appliquée au piston (25) de l'ensemble d'actionneur (20), le corps (21) réagit par le biais d'un palier de poussée (31) contre le capuchon de poussée (30).

7. Couplage selon l'une quelconque des revendications précédentes, dans lequel le corps (21) et le piston (25) forment, en combinaison, un actionneur hydraulique utilisé pour faire fonctionner de manière sélective l'embrayage à friction (2).

8. Couplage selon la revendication 7, dans lequel l'embrayage à friction (2) est un embrayage à friction multidisques, et l'actionneur hydraulique exerce un effort de serrage sur les disques d'embrayage (7, 8) de manière à transmettre l'entraînement de l'entrée rotative (3) à la sortie rotative (5).

9. Ensemble de transmission pour un véhicule automobile, ayant au moins un couplage de transmission rotatif (1) selon l'une quelconque des revendications 1 à 8.

10. Ensemble de transmission selon la revendication 9, dans lequel un système d'entraînement final auxiliaire faisant partie de l'ensemble a une paire de couplages de transmission rotatifs (1) ayant chacun un boîtier d'embrayage (3) connecté à des extrémités opposés d'un arbre d'entrée commun (160), chaque couplage de transmission rotatif (1) ayant un arbre de sortie respectif (5) connecté à rotation à l'arbre d'entrée commun (160) par le biais d'un embrayage à friction (2) du couplage de transmission rotatif respectif (1), chaque arbre de sortie (5) entraînant sélectivement, pendant l'utilisation, une roue respective (115, 116) d'un véhicule automobile (100) sur lequel est monté l'ensemble de transmission.

11. Ensemble selon la revendication 10, dans lequel l'ensemble fournit un entraînement permanent à deux ou plus de deux roues (117, 118) par le biais d'un arbre de sortie (151) et un entraînement sélectionnable à deux roues supplémentaires ou plus de deux roues supplémentaires (115, 116) par le biais des deux couplages de transmission rotatifs (1).

12. Véhicule automobile (100) ayant un moteur (111) entraînant un ensemble de transmission selon l'une quelconque des revendications 9 à 11, dans lequel le véhicule automobile (100) comprend en outre une source de pression hydraulique éloignée pour chaque couplage de transmission rotatif (1).

13. Véhicule automobile (100) selon la revendication 12, dans lequel la source éloignée de pression hydraulique est contrôlée par une unité de commande électronique (202) et le fonctionnement de chaque couplage de transmission rotatif (1) est contrôlé indépendamment par l'unité de commande électronique (202).
